# EUROPÄISCHE PATENTSCHRIFT

(11) **EP 3 176 111 B1**
(45) Veröffentlichungstag und Bekanntmachung des Hinweises auf die Patenterteilung: **12.02.2020**
(21) Anmeldenummer: 15003458.5
(22) Anmeldetag: 04.12.2015
(51) Int. Cl.: B65G 54/02, B07C 3/08

(54) **SORTIERVORRICHTUNG FÜR STÜCKGUT UND VERFAHREN**
ITEM SORTING DEVICE AND METHOD
DISPOSITIF DE TRI POUR MARCHANDISES AU DETAILS ET PROCEDE

(43) Veröffentlichungstag der Anmeldung: 07.06.2017
(73) Patentinhaber: BEUMER Group GmbH & Co. KG, 59269 Beckum (DE)
(72) Erfinder: Wiesmann, Thomas, 59269 Beckum (DE)
(74) Vertreter: Philipp, Matthias

(56) Entgegenhaltungen:
- EP-A2- 0 272 897
- EP-B1- 0 556 159
- FR-A1- 2 796 318
- US-A- 4 244 672
- US-A- 4 917 227
- US-A- 5 228 820
- US-A- 5 372 241
- US-A- 5 547 329
- US-A1- 2005 256 774
- US-A1- 2007 125 727

## Beschreibung

Die Erfindung bezieht sich auf eine Sortiervorrichtung für Stückgut, mit mehreren auf einer ersten Fahrbahn umlaufend bewegten Sortierwagen, die jeweils mit einem gesteuerten Lastaufnahmeelement zum Aufnehmen und Abgeben von Stückgut versehen sind, mit mindestens einer benachbart zu der ersten Fahrbahn angeordneten Einschleusstation, an der Stückgut auf ein Lastaufnahmeelement eines im Bereich der Einschleusstation befindlichen Sortierwagens zuführbar ist, und mit mehreren auf einer zweiten Fahrbahn bewegten Aufnahmewagen, wobei ein Teil der zweiten Fahrbahn innerhalb eines Übergabebereichs zur Übergabe eines Stückgutteils von einem Sortierwagen an einen bewegten Aufnahmewagen benachbart zu einem Teil der ersten Fahrbahn angeordnet ist, wie sie etwa aus der EP 0556159 B1 oder der WO 93/15986 bekannt ist, sowie auf ein Verfahren zum Sortieren von Stückgut unter Verwendung einer derartigen Vorrichtung.

EP 0 556 159 B1 beschreibt eine Anlage zum Sortieren von Stückgütern mit ersten Wagen, die auf einer geschlossenen ersten Schienenschleife fahrbar sind, und zweiten Wagen, die auf einer geschlossenen zweiten Schienenschleife fahrbar sind, wobei an Übergabestellen jeweils ein erster Wagen genau neben einem zweiten Wagen herläuft und beide Wagen eine gleiche Geschwindigkeit aufweisen.

FR 2 796 318 A1 offenbart eine Sortiervorrichtung, bei der Gegenstände von einem ersten Behältnis in ein zweites Behältnis übergebbar sind und beide Behältnisse innerhalb eines Übergabebereichs übereinander und mit gleichen Geschwindigkeiten verfahrbar sind und eine Übergabe eines Gegenstands zu einem bestimmten Zeitpunkt erfolgt. FR2796318 offenbart eine Sortiervorrichtung gemäß dem Oberbegriff des Anspruchs 1.

Bei diesen bekannten Sortiervorrichtungen ist stets eine Geschwindigkeitssynchronisation zwischen dem abgebenden Sortierwagen und dem aufnehmenden Aufnahmewagen vorgesehen.

Die Aufgabe der Erfindung besteht darin, eine flexiblere Übergabe von Stückgutteilen an beliebigen Stellen innerhalb eines Übergabebereichs zu ermöglichen.

Diese Aufgabe wird durch eine Sortiervorrichtung nach Anspruch 1 gelöst. Hierbei sind die Sortierwagen innerhalb des Übergabebereichs unterschiedlich schnell wie die Aufnahmewagen bewegbar. Es ist zweckmäßig, einen Sortierwagen innerhalb des Übergabebereichs relativ zu mehreren Aufnahmewagen zu bewegen, um die Möglichkeit zu haben, von einem Sortierwagen an einen bestimmten von mehreren Aufnahmewagen ein Stückgutteil übergeben zu können, oder auch nacheinander an mehrere Aufnahmewagen, und zwar zu dem Zeitpunkt, an dem sich der Sortierwagen benachbart zu dem bzw. einem ausgewählten Aufnahmewagen befindet.

Es wird somit ausgehend von den Positionen der Sortier- und Aufnahmewagen der Zeitpunkt der Übergabe gesteuert, in Abhängigkeit dessen sich der Ort der Übergabe aufgrund der Positionen von Sortier- und Aufnahmewagen ergibt, hingegen nicht als solcher gesteuert bzw. angewählt wird, wie es bei einer ortsfesten End- oder Übergabestelle der Fall ist.

Es kann vorgesehen sein, dass die erste Fahrbahn horizontale und/oder vertikale Krümmungen aufweist. Innerhalb des Übergabebereichs verlaufen allerdings die erste und die zweite Fahrbahn bevorzugt in einer horizontalen Ebene.

Weiterhin ist bevorzugt vorgesehen, dass die erste Fahrbahn innerhalb des Übergabebereichs parallel zu und in einem vorgegebenen Abstand von der zweiten Fahrbahn verläuft.

Die zweite Fahrbahn kann einen in sich geschlossenen Umlaufbereich umfassen, innerhalb dessen der Übergabebereich angeordnet ist. Der geschlossene Umlaufbereich kann Einlauf- und Auslaufstellen aufweisen, an denen zu beladende Aufnahmewagen in den Umlaufbereich einleitbar und beladene Aufnahmewagen aus dem Umlaufbereich ausleitbar sind. Innerhalb des Übergabebereichs bewegen sich die Sortierwagen bevorzugt in der gleichen Richtung wie die Aufnahmewagen.

Zweckmäßigerweise sind die Sortierwagen mittels berührungsloser Datenübertragung mit der Steuerung verbunden, beispielsweise mittels umlaufenden Schlitzhohlleiter, Leckwellenleiter, Infrarot- oder Funktechnik.

Es kann vorgesehen sein, dass jedes Lastaufnahmeelement der Sortierwagen und/oder jeder Sortierwagen von der Steuerung unmittelbar ansteuerbar ist. Alternativ besteht die Möglichkeit, dass ausgewählte Lastaufnahmeelemente und/oder Sortierwagen von der Steuerung unmittelbar als Masterelemente oder Masterwagen und andere Lastaufnahmeelemente und/oder Sortierwagen mittelbar über Masterelemente oder Masterwagen als Slave-Elemente oder Slave-Wagen ansteuerbar sind.

Die Sortierwagen können je nach Auslastung mit variabler Geschwindigkeit bewegbar sein.

Die Lastaufnahmeelemente der Sortierwagen sind bevorzugt als Kippschalen oder Quergutförderer ausgebildet.

Die Aufgabe der Erfindung wird ferner gelöst durch ein Verfahren nach Anspruch 12.

Ein ausgewählter Aufnahmewagen kann zur Aufnahme mehrerer Stückgutteile von einem oder unterschiedlichen Sortierwagen mehrmals entlang des geschlossenen Umlaufbereichs geführt werden. Der ausgewählte Aufnahmewagen erhält dann von mehreren Sortierwagen jeweils ein oder mehrere Stückgutteile, bis eine bestimmte vorgegebene Anzahl von Stückgutteilen in dem Aufnahmewagen erreicht ist. Der Aufnahmewagen kann dann aus der zweiten Fahrbahn ausgeleitet werden.

In Bezug auf die Sortierwagen besteht die Möglichkeit, dass diese einen in sich geschlossenen Sortierwagenzug bilden, der auf der ersten Fahrbahn umläuft, oder dass ein oder mehrere Sortierwagenzüge gebildet sind, die aus einem oder mehreren Sortierwagen bestehen und zwischen denen Abstände vorhanden sind.

Die Aufnahmewagen können bewegliche Behälter auf einer Rollenbahn sein, bahngeführte Transportmittel oder nicht-bahngeführte Wagen bzw. Shuttles.

Die Erfindung wird nachfolgend anhand eines Ausführungsbeispiels erläutert, wobei auf eine Zeichnung Bezug genommen ist, in der

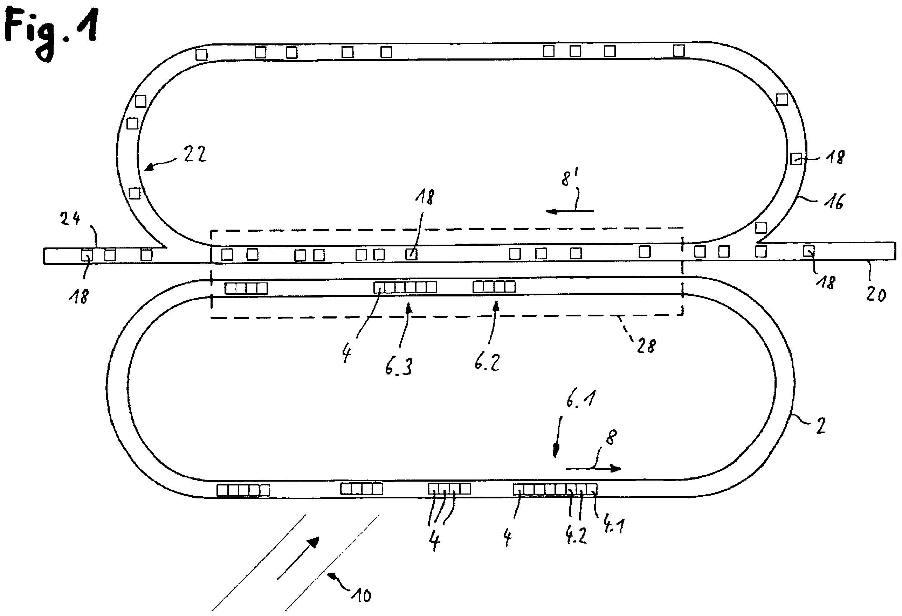

Fig.1 eine schematische Draufsicht auf eine erfindungsgemäße Sortiervorrichtung für Stückgut zeigt, die eine geschlossene erste Fahrbahn, eine zweite Fahrbahn mit einem geschlossenen Umlaufbereich, sowie eine Anzahl von Sortierwagenzügen und Aufnahmewagen zeigt.

Die in Fig. 1 in einer schematischen Draufsicht dargestellte Sortiervorrichtung umfasst zunächst eine erste Fahrbahn 2, die umlaufend geschlossen verlegt ist und auf der eine Reihe von Sortierwagen 4 umlaufend bewegt werden. Im dargestellten Ausführungsbeispiel sind eine Reihe von einzelnen zugartig zusammenhängenden Gruppen 6.1, 6.2, 6.3 usw. von Sortierwagen 4 gebildet, die zumindest zum Austausch von Informationssignalen miteinander gekoppelt sind und die als geschlossene Einheiten bewegt werden. Ein ausgewählter Sortierwagen, insbesondere ein in Fahrtrichtung 8 gesehen vorderster Sortierwagen 4.1 einer jeden Gruppe kann hierbei von einer nicht dargestellten übergeordneten Steuerung unmittelbar als Masterwagen angesprochen werden, während die übrigen Wagen 4.2 einer jeweiligen Gruppe 6.1, 6.2 usw. als Slave-Wagen von der Steuerung mittelbar über den jeweiligen Wagen 4.1 ansprechbar bzw. ansteuerbar sind. Der Masterwagen 4.1 einer jeden Gruppe erhält somit Steuerinformationen für sich selbst und für die ihm zugeordneten Slave-Wagen 4.2. Alternativ könnte die Steuerung mit sämtlichen Sortierwagen unmittelbar kommunizieren.

Jeder Sortierwagen 4 trägt mindestens ein Lastaufnahmeelement, auf dem ein oder mehrere zu sortierende Stückgutteile transportiert werden können. Die Lastaufnahmeelemente können beispielsweise als Kippschalen oder Quergutförderer ausgebildet sein, so dass eine effiziente und schonende Aufnahme und Übergabe von Stückgutteilen möglich ist.

Die Zuführung zu sortierender Stückgutteile erfolgt an mindestens einer Einschleusstation 10, an der beispielsweise ein Aufgabeförderer oder eine sonstige Zuführeinrichtung angeordnet sein kann.

Die Steuerung kommuniziert drahtlos mit den einzelnen Sortierwagen und insbesondere mit den einzelnen Lastaufnahmeelementen, um Aufnahme und Übergabe einzelner Stückgutteile zu steuern. Die Kommunikation zwischen Steuerung und Sortierwagen 4 kann beispielsweise so erfolgen, dass eine unmittelbare Kommunikation mit einem Sortierwagen 4.1 einer Gruppe 6.1 von Sortierwagen 4 besteht, so dass das zugehörige Lastaufnahmeelement als Masterelement ansprechbar ist, und dass Steuersignale, die für andere Sortierwagen 4 der selben Gruppe 6.1 bestimmt sind, über das erste Lastaufnahmeelement bzw. Masterelement an die anderen Lastaufnahmeelemente bzw. Slave-Elemente übermittelt werden. Alternativ könnte jedes einzelne Lastaufnahmeelement in unmittelbarer Kommunikationsverbindung mit der Steuerung stehen.

Jeder Sortierwagen 4 kann einen eigenen Antrieb besitzen, oder durch einen der ersten Fahrbahn zugeordneten Antrieb, beispielsweise Linearantrieb, antreibbar sein, wobei der Antrieb von der Steuerung steuerbar sein kann.

Die Sortiervorrichtung umfasst ferner eine zweite Fahrbahn 16, auf der Aufnahmewagen 18 in einer Fahrtrichtung 8' bewegt werden. Jeder Aufnahmewagen 18 dient der Übernahme eines oder einer Anzahl von Stückgutteilen von einem oder mehreren Sortierwagen 4, die auf der ersten Fahrbahn 2 umlaufen. Leere oder zu beladende Aufnahmewagen 18 können über eine Einlaufstelle 20 in einen in sich geschlossenen Umlaufbereich 22 der zweiten Fahrbahn 16 eingeleitet werden, und beladene Aufnahmewagen können über eine Auslaufstelle 24 aus dem Umlaufbereich 22 ausgeleitet werden. Die Aufnahmewagen können einen eigenen Antrieb besitzen oder über einen der zweiten Fahrbahn zugeordneten Antrieb, beispielsweise Linearantrieb, antreibbar sein, wobei der Antrieb von der Steuerung steuerbar sein kann.

Innerhalb eines Übergabebereichs 28 verläuft ein Teil der ersten Fahrbahn 2 benachbart zu einem Teil der zweiten Fahrbahn 16, wobei die erste Fahrbahn 2 innerhalb des Übergabebereichs 28 insbesondere parallel zu und in einem vorgegebenen Abstand von der zweiten Fahrbahn 16 verläuft. Die Richtung 8' ist so gewählt, dass sich die Sortierwagen 4 und die Aufnahmewagen 18 innerhalb des Übergabebereichs 28 in der gleichen Richtung bewegen.

Der Abstand zwischen der ersten und zweiten Fahrbahn ist so gewählt, dass ein zu übergebendes Stückgutteil von einem Lastaufnahmeelement eines ausgewählten Sortierwagens 4 an einen ausgewählten Aufnahmewagen 18 übergeben werden kann, auf ein entsprechendes Signal der Steuerung hin zu einem Zeitpunkt, an dem sich der ausgewählte Sortierwagen benachbart zu dem ausgewählten Aufnahmewagen befindet. Eine benachbarte Position eines Aufnahmewagens bezüglich eines Sortierwagens bedeutet insbesondere, dass sich der Sortierwagen quer zu der Fahrtrichtung gesehen auf gleicher Höhe mit dem Aufnahmewagen befindet.

Das Verfahren zum Sortieren von Stückgut unter Verwendung der Vorrichtung läuft wie folgt ab. Über die Einschleusstation 10 werden eine Reihe von zu sortierenden, d. h. ausgewählten Aufnahmewagen 18 zuzuführenden Stückgutteilen einem einzelnen oder mehreren Sortierwagen 4 zugeführt. Gleichzeitig befindet sich eine Reihe von Aufnahmewagen 18 auf der zweiten Fahrbahn 16 im Umlauf, genauer gesagt innerhalb des Umlaufbereichs 22. Die zentrale Steuerung erhält laufend Positionsinformationen betreffend die Position der Lastaufnahmeelemente jedes einzelnen Sortierwagens 4 und die Position jedes einzelnen Aufnahmewagens 18. Um übereinstimmende Positionen eines bestimmten Sortierwagens 4 oder dessen Lastaufnahmeelement mit einem bestimmten Aufnahmewagen 18 innerhalb des Übergabebereichs 28 sicherzustellen, kann die Steuerung bedarfsweise die Geschwindigkeit der Aufnahmewagen und/oder der Sortierwagen verändern, beispielsweise um zu verhindern, dass ein bestimmter Sortierwagen einen bestimmten Aufnahmewagen nur knapp nicht erreicht. Ansonsten führt der betreffende Aufnahmewagen und/oder der betreffende Sortierwagen einen weiteren Umlauf auf der zweiten bzw. ersten Fahrbahn aus.

Eine Übergabe eines bestimmten Stückgutteils von einem ausgewählten Sortierwagen an einen ausgewählten Aufnahmewagen erfolgt innerhalbdes Übergabebereichs, sobald sich beide Wagen an übereinstimmenden Positionen bzw. unmittelbar benachbart zueinander befinden, beispielsweise quer zur Fahrtrichtung gesehen auf gleicher Höhe, oder erfindungsgemäß sobald sich beide Wagen unter Berücksichtigung eines Geschwindigkeitsunterschieds zwischen Sortier- und Aufnahmewagen und unter Berücksichtigung einer "Flugbahn" eines zu übergebenden Stückgutteils geringfügig versetzt zueinander befinden, so dass eine optimale Übergabe eines Stückgutteils möglich ist.

Zu dem gewünschten Zeitpunkt der Übergabe gibt die Steuerung ein entsprechendes Signal an den betreffenden Sortierwagen bzw. dessen Lastaufnahmeelement, so dass die Übergabe des Stückgutteils ausgelöst wird. Der genaue Ort der Übergabe ergibt sich hierbei gewissermaßen von selbst, wobei es auf den Ort der Übergabe nicht ankommt, sondern lediglich darauf, dass sich beide beteiligten Wagen innerhalb des Übergabebereichs an übereinstimmenden Positionen befinden. Die Übergabestellen liegen daher nicht örtlich fest, sondern ergeben sich mehr oder weniger zufällig aus dem Übergabezeitpunkt, der von der Steuerung anhand der Bewegungsdaten der beteiligten Wagen bestimmt wird, so dass man von dynamischen End- oder Übergabestellen sprechen kann.

Wenn mehrere Stückgutteile in ein und denselben Aufnahmewagen zu übergeben sind, erfolgt dies in der Regel so, dass der Aufnahmewagen mehrfach entlang des Umlaufbereichs 22 geführt wird und bei einer oder jeder Passage des Übergabebereichs von einem, in der Regel jedes Mal von einem anderen, Sortierwagen ein Stückgutteil erhält. Wenn sämtliche Stückgutteile zugeführt sind, wird der solchermaßen beladene Aufnahmewagen über die Auslaufstelle 24 aus dem Umlaufbereich 22 herausgeführt.

### Bezugszeichenliste

- 2: erste Fahrbahn
- 4: Sortierwagen
- 4.1: Masterwagen
- 4.2: Slave-Wagen
- 6.1, 6.2, 6.3...: Gruppe (von 4)
- 8: Fahrtrichtung (von 4)
- 8': Fahrtrichtung (von 18)
- 10: Einschleusstation
- 16: zweite Fahrbahn
- 18: Aufnahmewagen
- 20: Einlaufstelle
- 22: Umlaufbereich
- 24: Auslaufstelle
- 28: Übergabebereich

## Patentansprüche

1. Sortiervorrichtung für Stückgut, mit mehreren auf einer ersten Fahrbahn (2) umlaufend bewegten Sortierwagen (4), die jeweils mit einem gesteuerten Lastaufnahmeelement zum Aufnehmen und Abgeben von Stückgut versehen sind, mit mindestens einer benachbart zu der ersten Fahrbahn (2) angeordneten Einschleusstation (10), an der Stückgut auf ein Lastaufnahmeelement eines im Bereich der Einschleusstation (10) befindlichen Sortierwagens (4) zuführbar ist, und mit mehreren auf einer zweiten Fahrbahn (16) bewegten Aufnahmewagen (18), wobei ein Teil der zweiten Fahrbahn (16) innerhalb eines Übergabebereichs (28) zur Übergabe eines Stückgutteils von einem Sortierwagen (4) an einen Aufnahmewagen (18) benachbart zu einem Teil der ersten Fahrbahn angeordnet ist, und mit einer zentralen Steuerung, die Positionsinformationen der Sortierwagen (4) auf der ersten Fahrbahn (2) und der Aufnahmewagen (18) auf der zweiten Fahrbahn (16) erhält und durch die ein Lastaufnahmeelement eines ausgewählten bewegten Sortierwagens (4) zur Übergabe eines darauf befindlichen Stückgutteils an einen ausgewählten bewegten Aufnahmewagen (18) ansteuerbar ist, zu einem Zeitpunkt, an dem sich der ausgewählte Sortierwagen (4) innerhalb des Übergabebereichs (28) benachbart zu dem ausgewählten Aufnahmewagen (18) befindet, und an einer beliebigen Stelle innerhalb des Übergabebereichs (28), ohne an feste Übergabestellen gebunden zu sein, dadurch gekennzeichneit, dass die Sortierwagen (4) innerhalb des Übergabebereichs (28) unterschiedlich schnell wie die Aufnahmewagen (18) bewegbar sind, **und dass** die Sortiervorrichtung zur Übergabe eines bestimmten Stückgutteils unter Berücksichtigung eines Geschwindigkeitsunterschieds zwischen geringfügig zueinander versetzt befindlichen Sortier- und Aufnahmewagen und unter Berücksichtigung einer Flugbahn des zu übergebenden Stückgutteils eingerichtet ist.

2. Sortiervorrichtung nach Anspruch 1, **dadurch gekennzeichnet, dass** die erste Fahrbahn (2) horizontale und/oder vertikale Krümmungen aufweist.

3. Sortiervorrichtung nach Anspruch 1 oder 2, **dadurch gekennzeichnet, dass** die erste und die zweite Fahrbahn (2, 16) innerhalb des Übergabebereichs (28) in einer horizontalen Ebene verlaufen.

4. Sortiervorrichtung nach einem der vorangehenden Ansprüche, **dadurch gekennzeichnet, dass** die erste Fahrbahn (2) innerhalb des Übergabebereichs (28) parallel zu und in einem vorgegebenen Abstand von der zweiten Fahrbahn (16) verläuft.

5. Sortiervorrichtung nach einem der vorangehenden Ansprüche, **dadurch gekennzeichnet, dass** die zweite Fahrbahn (16) einen in sich geschlossenen Umlaufbereich (22) umfasst, innerhalb dessen der Übergabebereich (28) angeordnet ist.

6. Sortiervorrichtung, nach Anspruch 5, **dadurch gekennzeichnet, dass** der Umlaufbereich Einlauf- und Auslaufstellen (20, 24) aufweist, an denen zu beladende Aufnahmewagen (18) in den Umlaufbereich (22) einleitbar und beladene Aufnahmewagen (18) aus dem Umlaufbereich (22) ausleitbar sind.

7. Sortiervorrichtung nach einem der vorangehenden Ansprüche, **dadurch gekennzeichnet, dass** die Sortierwagen (4) mittels berührungsloser Datenübertragung mit der Steuerung verbunden sind.

8. Sortiervorrichtung nach einem der vorangehenden Ansprüche, **dadurch gekennzeichnet, dass** jedes Lastaufnahmeelement oder jeder Sortierwagen (4) von der Steuerung unmittelbar ansteuerbar ist.

9. Sortiervorrichtung nach einem der Ansprüche 1 bis 7, **dadurch gekennzeichnet, dass** ausgewählte Sortierwagen (4.1) von der Steuerung unmittelbar als Masterwagen und andere Sortierwagen (4.2) mittelbar über Masterwagen als Slave-Wagen ansteuerbar sind.

10. Sortiervorrichtung nach einem der vorangehenden Ansprüche, **dadurch gekennzeichnet, dass** die Sortierwagen (4) je nach Auslastung mit variabler Geschwindigkeit bewegbar sind.

11. Sortiervorrichtung nach einem der vorangehenden Ansprüche, **dadurch gekennzeichnet, dass** die Lastaufnahmeelemente der Sortierwagen (4) als Kippschalen oder Quergurtförderer ausgebildet sind.

12. Verfahren zum Sortieren von Stückgut, unter Verwendung einer Sortiervorrichtung nach einem der vorangehenden Ansprüche, wobei einem oder mehreren Stückgutteilen ein ausgewählter Aufnahmewagen (18) als Sortierziel zugeordnet wird und das oder die Stückgutteile über die mindestens eine Einschleusstation (10) einem oder mehreren Sortierwagen (4) zugeführt und innerhalb des Übergabebereichs (28) an den ausgewählten Aufnahmewagen (18) übergeben werden, wobei zumindest der ausgewählte Sortierwagen (4) schneller oder langsamer als der ausgewählte Aufnahmewagen (18) bewegt wird, und wobei eine Übergabe eines bestimmten Stückgutteils erfolgt, sobald sich beide Wagen unter Berücksichtigung eines Geschwindigkeitsunterschieds zwischen Sortier- und Aufnahmewagen geringfügig versetzt zueinander befinden und eine Übergabe unter Berücksichtigung einer Flugbahn des zu übergebenden Stückgutteils möglich ist.

13. Verfahren nach Anspruch 13, soweit auf Anspruch 6 rückbezogen, **dadurch gekennzeichnet, dass** ein ausgewählter Aufnahmewagen (18) zur Aufnahme mehrerer Stückgutteile von einem oder unterschiedlichen Sortierwagen (4) mehrmals entlang des geschlossenen Umlaufbereichs (22) geführt wird.

## Claims

1. Item sorting device, comprising a plurality of sorting carriages (4) that move in a circulating manner on a first track (2) and that are each provided with a controlled load-receiving element for receiving and dispensing items, comprising at least one infeed station (10) arranged adjacent to the first track (2) at which items can be fed onto a load-receiving element of a sorting carriage (4) located in the region of the infeed station (10), and comprising a plurality of receiving carriages (18) that move on a second track (16), a portion of the second track (16) within a transfer region (28) for transferring some of the items from a sorting carriage (4) to a receiving carriage (18) being arranged adjacent to a portion of the first track, and comprising a central control system, which obtains position information on the sorting carriages (4) on the first track (2) and on the receiving carriages (18) on the second track (16) and by means of which a load-receiving element of a selected moving sorting carriage (4) can be controlled to transfer some of the items located thereon to a selected moving receiving carriage (18) at a point in time at which the selected sorting carriage (4) is located within the transfer region (28) adjacent to the selected receiving carriage (18) and at any desired point within the transfer region (28) without being bound to fixed transfer points, **characterised in that** the sorting carriages (4) can move within the transfer region (28) at different speeds to the receiving carriages (18), and **in that** the sorting device is configured to transfer particular items in consideration of a speed difference between sorting and receiving carriages that are slightly offset relative to one another and in consideration of a trajectory of the items to be transferred.

2. Sorting device according to claim 1, **characterised in that** the first track (2) comprises horizontal and/or vertical bends.

3. Sorting device according to claim 1 or 2, **characterised in that** the first and the second track (2, 16) extend in a horizontal plane within the transfer region (28).

4. Sorting device according to any of the preceding claims, **characterised in that** the first track (2) extends in parallel with and at a predefined distance from the second track (16) within the transfer region (28).

5. Sorting device according to any of the preceding claims, **characterised in that** the second track (16) comprises a self-contained circulation region (22) within which the transfer region (28) is arranged.

6. Sorting device according to claim 5, **characterised in that** the circulation region comprises inlet and outlet points (20, 24) at which receiving carriages (18) to be loaded can be led into the circulation region (22) and loaded receiving carriages (18) can be led out of the circulation region (22).

7. Sorting device according to any of the preceding claims, **characterised in that** the sorting carriages (4) are connected to the control system by means of contactless data transmission.

8. Sorting device according to any of the preceding claims, **characterised in that** each load-receiving element or each sorting carriage (4) can be directly controlled by the control system.

9. Sorting device according to any of claims 1 to 7, **characterised in that** selected sorting carriages (4.1) can be controlled directly by the control system as master carriages and other sorting carriages (4.2) can be indirectly controlled via master carriages as slave carriages.

10. Sorting device according to any of the preceding claims, **characterised in that** the sorting carriages (4) can move at a variable speed depending on the degree to which they are loaded.

11. Sorting device according to any of the preceding claims, **characterised in that** the load-receiving elements of the sorting carriages (4) are designed as tipping trays or cross belt conveyors.

12. Method for sorting items, using a sorting device according to any of the preceding claims, wherein one or more items are assigned a selected receiving carriage (18) as the sorting destination and the item or items are fed to one or more sorting carriages (4) via the at least one infeed station (10) and are transferred to the selected receiving carriage (18) within the transfer region (28), wherein at least the selected sorting carriage (4) is moved more quickly or more slowly than the selected receiving carriage (18), and wherein a transfer of a particular item takes place as soon as both carriages are slightly offset relative to one another in consideration of a speed difference between sorting and receiving carriages and a transfer is possible in consideration of a trajectory of the items to be transferred.

13. Method according to claim 13, insofar as it refers to claim 6, **characterised in that** a selected receiving carriage (18) for receiving a plurality of items from one or different sorting carriages (4) is guided multiple times along the self-contained circulation region (22).

## Revendications

1. Dispositif de tri pour marchandises au détail composé d'une pluralité de chariots de tri (4) qui se déplacent dans un mode de circulation sur une première voie (2), qui comportent, individuellement, un élément contrôlé de réception de charge, qui sont conçus pour recevoir et distribuer des marchandises et qui ont au moins un poste d'introduction (10) implanté juste à côté de la première voie (2) et au niveau duquel des marchandises peuvent être introduites sur un élément de réception de charge d'un chariot de tri (4) qui est implanté dans la zone occupée par le poste d'introduction (10), et qui comporte une pluralité de chariots de réception (18) qui se déplacent sur une deuxième voie (16), et une partie de cette deuxième voie (16), à l'intérieur d'une zone de transfert (28), assure le transfert d'une partie des marchandises depuis un chariot de tri (4) et à destination d'un chariot de réception (18) qui est disposé juste à côté d'une partie de la première voie et composé d'un système central de commande qui obtient des informations sur la position des chariots de tri (4) sur la première voie (2) et sur celle des chariots de réception (18) sur la deuxième voie (16) et par l'entremise duquel un élément de réception de charge d'un chariot sélectionné de tri (4) en mouvement, peut être piloté pour transférer une partie des marchandises qui s'y trouvent sur un chariot sélectionné de réception (18) en mouvement à un moment donné durant lequel le chariot sélectionné de tri (4) se trouve à l'intérieur de la zone de transfert (28), juste à côté du chariot sélectionné de réception (18) et à n'importe quel point souhaité se situant dans la zone de transfert (28), sans rattachement à des points fixes de transfert, et **se caractérisant par le fait que** les chariots de tri (4) peuvent se déplacer à l'intérieur de la zone de transfert (28), à des vitesses différentes, jusqu'aux chariots de réception (18), et ce dispositif de tri est configuré pour transférer des marchandises spécifiques en fonction du différentiel de vitesse entre les chariots de tri et les chariots de réception qui présentent un léger décalage les uns par rapport aux autres et en fonction d'une trajectoire des marchandises à transférer.

2. Le dispositif de tri que décrit la revendication 1 et qui se **caractérise par le fait que** la première voie (2) comporte des courbes horizontales et (ou) verticales.

3. Le dispositif de tri que décrit la revendication 1 ou 2 et qui se **caractérise par le fait que** la première voie (2) et la deuxième voie (16) suivent un plan horizontal à l'intérieur de la zone de transfert (28).

4. Le dispositif de tri que décrit l'une ou l'autre des revendications précédentes et qui se **caractérise par le fait que** la première voie (2), à l'intérieur de la zone de transfert (28), est parallèle à la deuxième voie (16) et se situe à une distance prédéfinie de cette dernière.

5. Le dispositif de tri que décrit l'une ou l'autre des revendications précédentes et qui se **caractérise par le fait que** la deuxième voie (16) comporte une zone autonome de circulation (22) à l'intérieur de laquelle est implantée la zone de transfert (28).

6. Le dispositif de tri que décrit la revendication 5 et qui se **caractérise par le fait que** la zone de circulation comporte des points d'entrée et de sortie (20, 24) au niveau desquels les chariots de réception (18) à charger peuvent être acheminés dans la zone de circulation (22) et au niveau desquels les chariots de réception chargés (18) peuvent être acheminés en dehors de la zone de circulation (22).

7. Le dispositif de tri que décrit l'une ou l'autre des revendications précédentes et qui se **caractérise par le fait que** les chariots de tri (4) sont raccordés au système de commande en faisant appel à une transmission de données sans contact.

8. Le dispositif de tri que décrit l'une ou l'autre des revendications précédentes et qui se **caractérise par le fait que** chaque élément de réception de charge ou chaque chariot de tri (4) peut être directement piloté par le système de commande.

9. Le dispositif de tri que décrit l'une ou l'autre des revendications 1 à 7 et qui se **caractérise par le fait que** les chariots sélectionnés de tri (4.1) peuvent être pilotés directement par le système de commande en tant que chariots directeurs, alors que d'autres chariots de tri (4.2) peuvent être pilotés indirectement par l'entremise des chariots directeurs en tant que chariots menés.

10. Le dispositif de tri que décrit l'une ou l'autre des revendications précédentes et qui se **caractérise par le fait que** les chariots de tri (4) peuvent se déplacer à une vitesse variable, en fonction de leur niveau de charge.

11. Le dispositif de tri que décrit l'une ou l'autre des revendications précédentes et qui se **caractérise par le fait que** les éléments de réception de charge des chariots de tri (4) sont conçus sous la forme de plateaux à bascule ou de convoyeurs à tapis transversal.

12. Le procédé de tri de marchandises au détail qui fait appel au dispositif de tri que décrit l'une ou l'autre des revendications précédentes, si ce n'est qu'une ou plusieurs marchandises est ou sont confiées à un chariot sélectionné de réception (18) en tant que destination de tri et que la ou les marchandises est ou sont acheminées jusqu'à un ou plusieurs chariots de tri (4) par le biais d'au moins un poste d'introduction (10) avant son ou leur transfert sur le chariot sélectionné de réception (18), à l'intérieur de la zone de transfert (28), et, à titre minimum, le chariot sélectionné de tri (4) se déplace plus vite ou plus lentement que le chariot sélectionné de réception (18) et un transfert d'une marchandise spécifique a lieu dès que les deux chariots présentent un léger décalage l'un par rapport à l'autre, en fonction d'un différentiel de vitesse entre les chariots de tri et les chariots de réception et un transfert est possible, en fonction d'une trajectoire des marchandises à transférer.

13. Le procédé que décrit la revendication 13, et se référant à la revendication 6, et qui se **caractérise par le fait qu'**un chariot sélectionné de réception (18), pour assurer la réception d'une pluralité de marchandises en provenance d'un ou plusieurs chariots de tri (4), est guidé à plusieurs reprises le long de la zone autonome de circulation (22).
